# EUROPÄISCHE PATENTANMELDUNG

(11) **EP 0 900 713 A1**
(43) Veröffentlichungstag der Anmeldung: **10.03.1999**
(21) Anmeldenummer: 98114953.7
(22) Anmeldetag: 08.08.1998
(51) Int. Cl.: B62D 9/02, B62D 25/20

(54) **Kraftfahrzeug mit einer Bodenanlage**

(30) Priorität: 05.09.1997 DE 19738833
(71) Anmelder: DAIMLER-BENZ AKTIENGESELLSCHAFT, 70567 Stuttgart (DE)
(72) Erfinder: Hölzel, Günter, 73269 Hochdorf (DE); Maier, Franz, 73553 Alfdorf (DE)

(57) **Zusammenfassung**

Die Erfindung bezieht sich auf ein Kraftfahrzeug mit einer Bodenanlage (8), die im Bereich des Fahrgastraumes eine vergrößerte Dicke aufweist, wobei die Bodenanlage zur Verbesserung des Insassenschutzes verstärkt ist.

Um beim Seitenaufprall eines Personenkraftwagens auf das Kraftfahrzeug die Gefahr übermäßiger Verformungen der Fahrgastzelle zu verringern, weist die Bodenanlage an ihrer Unterseite eine Abweisschräge (9) auf, die sich von der Seite der Bodenanlage ausgehend schräg nach unten auf die Längsmittenebene des Fahrzeugs zu erstreckt.

## Beschreibung

Die Erfindung betrifft ein Kraftfahrzeug mit einer Bodenanlage der im Oberbegriff des Hauptanspruches angegebenen Art.

Ein Kraftfahrzeug mit derartiger Bodenanlage ist z. B. aus der DE 39 33 417 C2 bereits als bekannt zu entnehmen, wobei zur Verstärkung der Bodenstruktur drei baugleiche, tiefgezogene Blechplatten unter einer Stapelanordnung ggf. unter Zwischenlage von armierten Kunststoffen miteinander verbunden werden. Durch eine solche Bauweise läßt sich eine Bodenanlage schaffen, die gegenüber einer üblicherweise verwendeten Blechplatte als Fahrzeugboden eine erheblich verbesserte Widerstandsfähigkeit gegenüber Verformungen bietet. Dies wirkt sich z.B. auch beim Seitenaufprall eines anderen Personenkraftwagens günstig auf die Insassensicherheit des Kraftfahrzeugs aus.

Die bekannte Bodenanlage läßt sich jedoch nur verwenden, wenn ihre Umfangskontur über die Dicke der Bodenanlage weitgehend konstant gehalten werden kann und keine übermäßigen Abweichungen in der Formgebung von Unterseite und Oberseite der Bodenanlage angestrebt werden, wie dies aus konstruktiven Gründen häufig der Fall sein wird. Auch muß die verbesserte Stabilität der Bodenanlage beim Seitenaufprall mit einem erheblichen Gewichtszuwachs erkauft werden, was häufig unerwünscht sein wird.

Der Erfindung liegt die Aufgabe zugrunde, ein Kraftfahrzeug mit einer Bodenanlage der gattungsgemäßen Art dahingehend weiterzuentwickeln, daß die Gefahr übermäßiger Verformungen der Fahrgastzelle beim Seitenaufprall eines anderen Personenkraftwagens auf das Kraftfahrzeug deutlich verringert werden kann.

Die erfindungsgemäße Lösung dieser Aufgabe ist Gegenstand der kennzeichnenden Merkmale des Hauptanspruchs.

Aus den übrigen Ansprüchen sind vorteilhafte Ausgestaltungen der Erfindung zu entnehmen.

Durch die erfindungsgemäß gestaltete Bodenanlage des Kraftfahrzeugs wird diese teilweise vom Frontende des seitlich aufprallenden Personenkraftwagens unterfahren, wodurch ein erheblicher Teil der Wucht des Aufpralls in eine Deformation des üblicherweise als stoßabsorbierende Knautschzone ausgebildeten Frontendes umgewandelt werden kann, ohne daß es dabei zu nennenswerten Intrusionen der Abweisschrägen des Unterbodens kommen muß. Es versteht sich dabei, daß die abweisende Wirkung der Abweisschrägen besonders wirksam ist, wenn diese auf gleicher Höhe lieben wie die Stoßfänger des kollidierenden PKW. Jedoch könnte ein Frontende mit entsprechend höherliegendem Stoßfänger durch eine ausreichend steife Seitenwand auch auf eine Unterfahrhöhe abgeflacht werden.

Als besonders wirksam ist eine Abweisschräge anzusehen, die bezogen auf die horizontale Breitenrichtung des Fahrzeugs unter einem Winkel von ca. 30 Grad verläuft.

Prinzipiell wäre es denkbar, nur auf der Fahrerseite unter der Fahrgastzelle eines Kraftwagens eine Abweisschräge vorzusehen.

Um den Insassenschutz beim Seitenaufprall unabhängig von der Aufprallseite zu verbessern, werden zweckmäßig auf beiden Fahrzeugseiten entgegengesetzte Abweisschrägen angeordnet, die an einen ebenen Mittelbereich des Unterbodens angrenzen, wobei eine spiegelsymmetrische Anordnung der Abweisschrägen auch wegen der gleichmäßigen Umströmungskräfte besonders günstig ist. Durch Variation der Breite des ebenen Mittelbereiches läßt sich die Bodenanlage unter Beibehaltung des Schrägungswinkels problemlos an unterschiedliche Fahrzeugbreiten anpassen.

Ein besonders wirksamer Insassenschutz ist gegeben, wenn die Bodenanlage als dicker Hohlboden ausgebildet ist. Als besonders guter Kompromiß zwischen einer guten Bauraumausnutzung im Innenraum und einer optimalen Schutzwirkung der Abweisschrägen ist dabei ein Verlauf des Innenraumbodens etwa auf halber Höhe der Abweisschrägen anzusehen.

Im Interesse einer guten Bauraumausnutzung kann im Hohlquerschnitt zwischen Unterboden und Innenraumboden ein Unterbringungsraum vorgesehen werden. Aufgrund der Abweisfunktion der Abweisschrägen können in der Bodenanlage nicht nur ein Bauraum für elektrische bzw. elektronische Steuergeräte sondern aufgrund der geschützten Einbaulage auch z. B. ein Kraftstofftank für brennbare Kraftstoffe untergebracht werden.

Vorzugsweise ist die Bodenanlage der Fahrzeugkarosserie durch einen oder mehrere Crashquerträger ausgesteift, um die Quersteifigkeit nicht allein über den Verbund aus Unterboden und Innenraumboden bereitstellen zu müssen. Um trotzdem problemlos Leitungen oder dgl. ohne Überlänge in Längsrichtung der Bodenanlage verlegen zu können, verläuft jeder Crashquerträger vorzugsweise in einem ausreichenden Abstand oberhalb des Unterbodens.

Die erfindungsgemäße Bodenanlage ist darüber hinaus in besonderer Weise für Kurvenneigerfahrzeuge geeignet, deren Aufbau bei Kurvenfahrten etwa entsprechend den Rädern des Fahrzeugs seitlich geneigt wird. Hierbei kann eine Abstimmung der Abweisschrägen auf die vorgesehene maximale Kurvenneigung vorgenommen werden. Dadurch wird erreicht, daß der Wagenkasten bzw. die Bodenanlage im Mittelbereich keine übermäßige Bodenfreiheit aufweisen muß, um die gewünschte Kurvenneigung des Fahrzeugs zu ermöglichen. Bei Geradeausfahrt des Kurvenneigerfahrzeugs bleibt die den Seitenaufprall mildernde Wirkung der Abweisschrägen trotzdem erhalten.

Damit die verstärkte Bodenanlage das Fahrzeuggewicht nicht zu ungünstig beeinflußt, wird als Werkstoff zumindest für Teile der Bodenanlage ein Leichtmetall, insbesondere Aluminium, vorgesehen.

Nachfolgend ist ein Ausführungsbeispiel der Erfindung anhand einer zeichnerischen Darstellung näher erläutert.

In der Darstellung zeigen:
- Fig. 1: eine Vorderansicht eines Kurvenneigerfahrzeugs bei Kurvenfahrt mit maximaler Seitenneigung,
- Fig. 2: das Kurvenneigerfahrzeug nach Fig. 1 bei Geradeausfahrt,

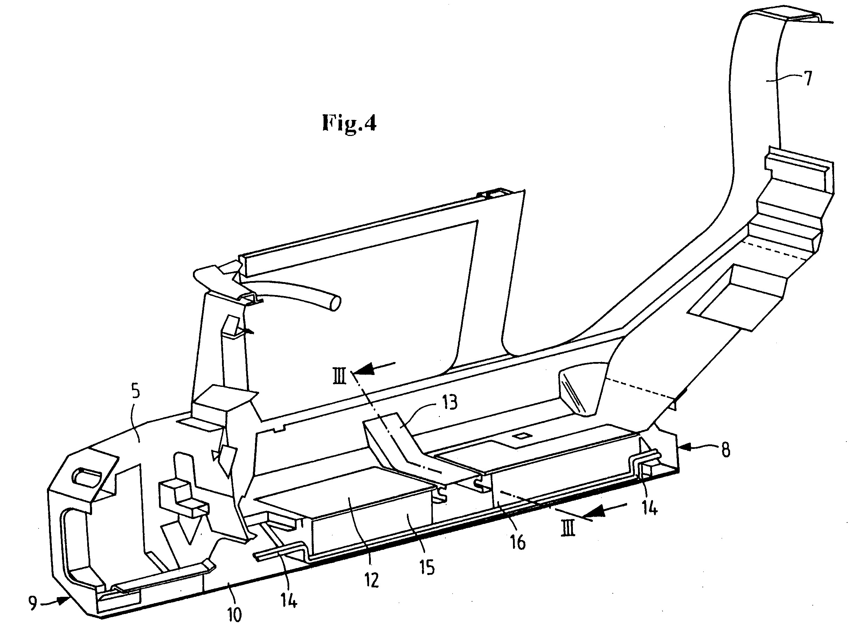

- Fig. 3: einen Querschnitt durch die Bodenanlage des Kurvenneigerfahrzeugs gemäß der Schnittlinie III-III in Fig. 4 und
- Fig. 4: einen Längsschnitt durch die Bodenanlage im abgeflachten Mittelbereich der Schnittlinie IV-IV in Fig. 3 entsprechend.

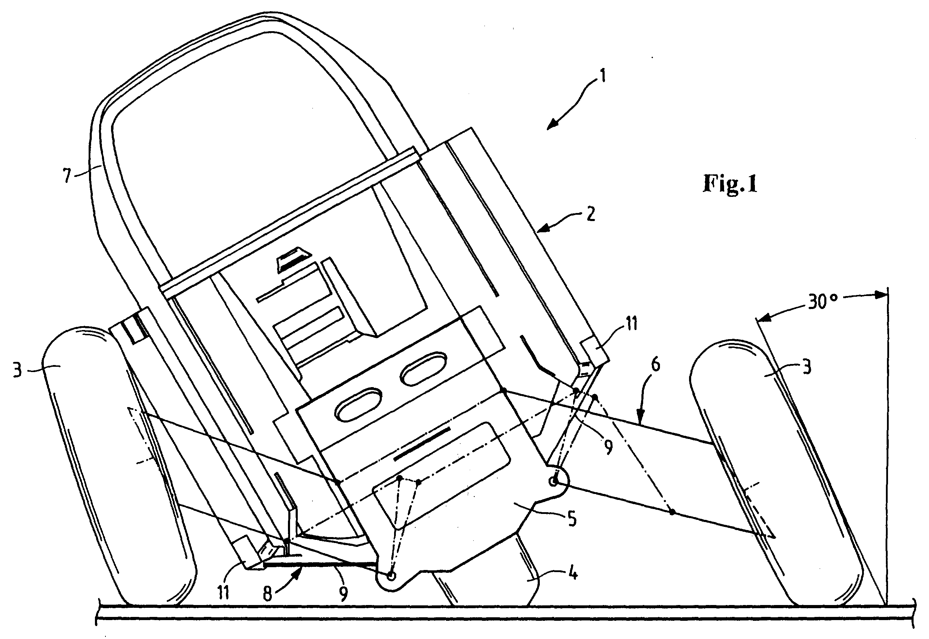

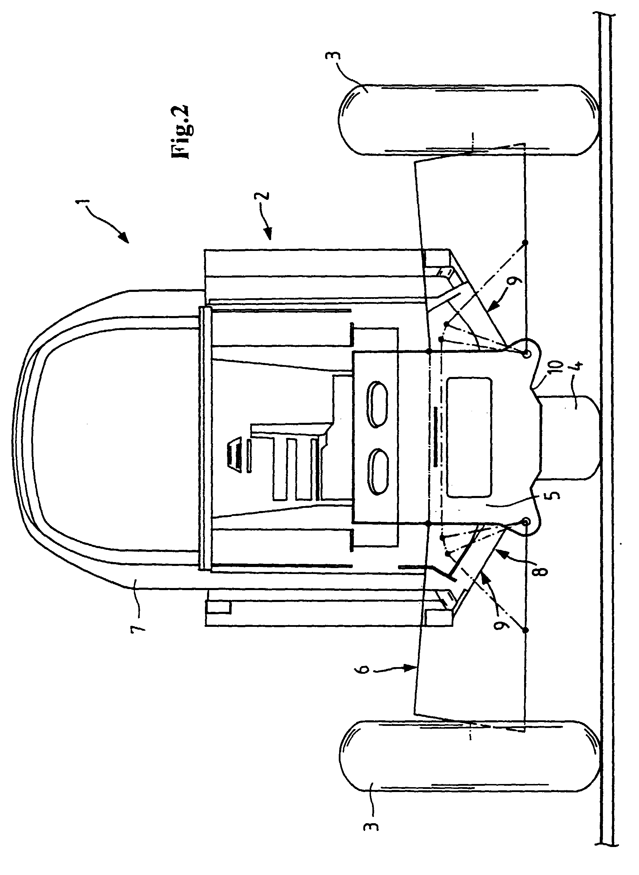

Ein in den Fig. 1 und 2 von vorn gezeigtes Kurvenneigerfahrzeug 1 weist als tragende Karosseriestruktur einen Wagenkasten 2 bzw. Chassis auf. Beim Kurvenneigerfahrzeug 1 handelt es sich um ein Dreiradfahrzeug mit zwei seitlich neben dem Wagenkasten 2 angeordneten Vorderrädern 3 und einem mittig angeordneten Hinterrad 4. Von der vorderen Stirnseite des Wagenkastens 2 ragt ein Tragrahmen 5 mit rechteckförmigem Querschnitt ab, der unbeweglich am Wagenkasten 2 angebracht ist. Der Tragrahmen 5 dient ähnlich einem Fahrschemel zur Befestigung der vorderen Radaufhängungen 6, ist jedoch im Unterschied zu üblichen Fahrschemeln starr mit dem Wagenkasten 2 verbunden.

Die vorderen Radaufhängungen 6 der gelenkten Vorderräder weisen jeweils den zugeordneten Achsschenkel führende Doppeldreiecksquerlenker auf, die über die Seitenwände des Tragrahmens 5 zu einem Lenkerparallelogramm geschlossen sind. Zwischen der linken und der rechten Radaufhängung ist ferner eine Koppelstangenmechanik vorgesehen, durch welche die Radaufhängungen miteinander bewegungsgekoppelt sind, und die durch eine Hydraulikzylinderanordnung gegen die Kraft eines zugeordneten Federbeins beaufschlagbar sind. Da die Vorderräder 3 gelenkt sind, umfaßt die Koppelstangenmechanik außerdem eine Spurstangenanordnung. Die genaue Konstruktion dieser Vorderachse ist aus der deutschen Patentanmeldung 196 08 578 bereits als bekannt zu entnehmen und daher nicht im Detail erläutert.

Das Hinterrad 4 ist über eine nicht gezeigte Längsschwinge geführt, die hinten mittels einer Konsole am Wagenkasten 2 bzw. Chassis angelenkt ist. Die Radaufhängung des Hinterrades 4 ist ebenfalls nicht näher beschrieben, da sie in ähnlicher Weise zum Führen des Hinterrades am Rohrrahmen von Motorrädern gebräuchlich ist. Die Bereifung des Hinterrades 4 wie auch der Vorderräder 3 weist ferner entsprechend üblichen Luftreifen von Motorrädern einen im Querschnitt abgerundeten Laufstreifen auf.

Aufgrund der vorgesehenen Fahrwerksgestaltung ergibt sich beim Durchfahren von Kurven eine Seitenneigung der Räder 3 und 4 bis zu etwa 30 Grad gegenüber der senkrechten Position gemäß Fig. 2, an welcher der Wagenkasten 2 synchron beteiligt ist, da er mit dem Hinterrad 4 geneigt wird. Im Wagenkasten 2 sind hintereinander zwei Sitzplätze angeordnet. Da die Insassen somit im Bereich der Mittellängsebene positioniert sind, ergibt sich bei Kurvenfahrten ein Fahrerlebnis, das dem beim Fahren eines Motorrades sehr ähnlich ist und daher großen Fahrspaß vermitteln kann. Gleichzeitig läßt sich die Insassensicherheit gegenüber einem Zweirad deutlich verbessern, zumal der Wagenkasten 2 -wie bei einem Cabriolet- mit einem die Breite des Innenraums überspannenden Überrollbügel 7 versehen ist und sich die bei Kraftwagen bewährten Rückhaltesysteme problemlos verwenden lassen.

Um zu erreichen, daß die vorgesehenen Seitenneigungen des Kurvenneigerfahrzeugs 1 bei einer nicht übermäßigen Bodenfreiheit des Wagenkastens 2 möglich werden, weist der Wagenkasten 2 eine Bodenanlage 8 auf, die an ihrer Unterseite seitlich neben einem die größte Nähe zur Fahrbahn aufweisenden Mittelbereich unter Anpassung an die maximal vorgesehene Seitenneigung abgeschrägt sind. Bei günstiger Abstimmung wird dadurch, wie in Fig. 1 sichtbar ist, eine Kurvenfahrt mit maximaler Seitenneigung möglich, wobei der abgeschrägte Bereich des Wagenkastens 2 auf der Kurveninnenseite in eine zur Fahrbahn weitgehend parallele Neigungsstellung gelangt.

Damit das Verletzungsrisiko des bzw. der Insassen des Kurvenneigerfahrzeugs 1 beim Seitenaufprall eines PKW auf dessen Wagenkasten 2 reduziert wird, dienen die hier unter einem Winkel von ca. 30 Grad gegenüber der Horizontalrichtung abgeschrägten Bereiche an der Unterseite der Bodenanlage 8 gleichzeitig als Abweisschrägen 9, an denen das Frontende des aufprallenden PKW ggf. unter Deformation bzw. Abflachen seiner Knautschzone unter die Bodenanlage 8 abgelenkt wird. Hierdurch wirkt in vorteilhafter Weise nur noch eine Komponente des Kraftstoßes als Beulkraft auf die beaufschlagte Abweisschräge 9 ein.

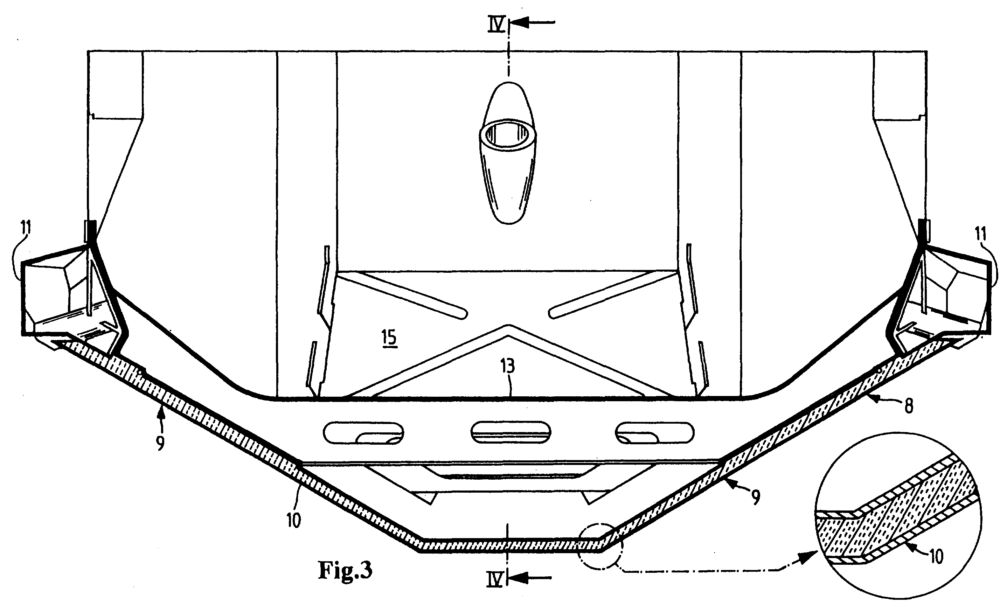

Um eine hohe Beulsteifigkeit der Abweisschrägen 9 zu erreichen, ist der einen trapezförmigen Wannenquerschnitt aufweisende Unterboden 10 der Bodenanlage 8 als Sandwichkonstruktion ausgebildet, wobei zwischen zwei Deckbleche mit entsprechender Wannenform ein angepaßter Kern aus Aluminiumschaum eingeklebt ist. Wie in Verbindung mit der Schnittdarstellung nach Fig. 3 zu erkennen ist, endet der Unterboden 10 seitlich an Längsträgern 11 aus Strangpreßprofilen, welche die Bodenanlage 8 seitlich begrenzen. Aus Gewichtsgründen bestehen die Strangpreßprofile, die unlösbar mit dem Unterboden 10 verbunden sind, aus einer hochfesten Aluminiumlegierung. Von der Unterseite dieser Längsträger 11 ausgehend erstrecken sich die Abweisschrägen 9 somit im Querschnitt gesehen unter geradem Verlauf auf den Mittelbereich des Unterbodens 10 zu, der sich ebenfalls gerade aber -bei senkrecht stehenden Wagenkasten 2 gesehenhorizontal in Breitenrichtung der Bodenanlage 8 erstreckt.

Um die Stabilität der Bodenanlage 8 und damit auch des Wagenkastens 2 insgesamt weiter zu verbessern, ist diese als Hohlboden ausgebildet. Ein mittragender Innenraumboden 12 liegt dabei in einem erheblichen Abstand oberhalb des Unterbodens 10 und ist seitlich lösbar mit den zugeordneten Längsträgern 11 verbunden.

Im Vordersitzbereich des Wagenkastens 2 wird der Hohlboden von einem Crashquerträger 13 durchsetzt, dessen Enden mit den seitlichen Längsträgern 11 verbunden sind. Der spiegelsymmetrische Crashquerträger 13 hat die Aufgabe, den Vordersitzbereich beim Seitenaufprall in besonderer Weise gegen übermäßige Intrusionen der Bodenanlage 8 zu schützen. Daher liegen seine seitlichen Endbereiche etwa über die halbe Querschnittslänge der Abweisschrägen 9 zur direkten Abstützung an der Oberseite des Unterbodens 10 auf. Der zwischen diesen Endbereichen liegende Mittelbereich des Crashquerträgers 13 verläuft horizontal in einem entsprechenden Abstand oberhalb des Unterbodens 10. Dadurch bleibt es in wünschenswerter Weise möglich, Leitungen 14 problemlos entlang der Bodenanlage zu verlegen.

Der Hohlraum zwischen Unterboden 10 und Innenraumboden 12 läßt sich zudem vorteilhaft als Anordnungsraum für einen Kraftstofftank 15 sowie als Anordnungsraum 16 für elektrische oder elektronische Bauelemente nutzen. Es versteht sich, daß wegen der Verlegung der Leitungen 14 auch der Kraftstofftank 15 zumindest bereichsweise einen Abstand zum Unterboden aufweisen muß.

Das anhand eines Kurvenneigerfahrzeuges 1 erläuterte Sicherheitskonzept mit Abweisschrägen zur Verbesserung des Insassenschutzes beim Seitenaufprall eines PKW ist prinzipiell auch für Kraftwagen ohne Kurvenneigetechnik geeignet, soweit deren Bodenanlage hierfür adaptiert wird oder geeignet ist.

Falls die Abweisschrägen z. B. aus gestalterischen Gründen bei einen Kraftwagen unerwünscht sind, wäre es möglich, diese Abweisschrägen zu verkleiden. Hierzu wäre es denkbar, großformatige Kunststoffverkleidungen aus PP oder dgl. einzusetzen, die sich als Stoßfängerschürzen bewährt haben, und durch die Wucht eines Seitenaufpralls relativ widerstandsarm verdrängt bzw. abgeschert werden können.

## Patentansprüche

1. Kraftfahrzeug mit einer Bodenanlage, die im Bereich des Fahrgastraumes eine vergrößerte Dicke aufweist, wobei die Bodenanlage zur Verbesserung des Insassenschutzes verstärkt ist,
**dadurch gekennzeichnet**,
daß die Bodenanlage ( 8 ) an ihrer Unterseite eine Abweisschräge ( 9 ) aufweist, die sich von der Seite der Bodenanlage ( 8 ) ausgehend schräg nach unten auf die Längsmittenebene des Kraftfahrzeugs ( Kurvenneigerfahrzeugs 1 ) zu erstreckt.

2. Kraftfahrzeug nach Anspruch 1,
**dadurch gekennzeichnet**,
daß die Abweisschräge ( 9 ) bezogen auf die Horizontalrichtung unter einem Winkel von etwa 30 Grad verläuft.

3. Kraftfahrzeug nach Anspruch 1,
**dadurch gekennzeichnet**,
daß die Bodenanlage ( 8 ) an ihrer Unterseite einen etwa horizontal verlaufenden Mittelbereich aufweist, an den beidseitig eine Abweisschräge ( 9, 9 ) angrenzt.

4. Kraftfahrzeug nach Anspruch 3,
**dadurch gekennzeichnet**,
daß die Abweisschrägen ( 9, 9 ) bezogen auf die Längsmittelebene der Bodenanlage ( 8 ) spiegelsymmetrisch angeordnet sind.

5. Kraftfahrzeug nach Anspruch 1,
**dadurch gekennzeichnet**,
daß die Bodenanlage ( 8 ) als Hohlboden mit beabstandet über einem Unterboden ( 10 ) liegenden Innenraumboden ( 12 ) ausgebildet ist.

6. Kraftfahrzeug nach Anspruch 5,
**dadurch gekennzeichnet**,
im Hohlquerschnitt zwischen Innenraumboden ( 12 )und Unterboden ( 10 ) mindestens ein Unterbringungsraum ( Kraftstofftank 15 , Anordnungsraum 16 ) vorgesehen ist.

7. Kraftfahrzeug nach Anspruch 5,
**dadurch gekennzeichnet**,
daß die Bodenanlage () durch mindestens einen in ihrem Hohlquerschnitt angeordneten Querträger ( Crashquerträger 13 ) ausgesteift ist.

8. Kraftfahrzeug nach Anspruch 7,
**dadurch gekennzeichnet**,
daß der Querträger ( Crashquerträger 13 ) im Mittelbereich der Bodenanlage ( 8 ) in einem Abstand zum Unterboden ( 10 ) verläuft.

9. Kraftfahrzeug nach Anspruch 4,
**dadurch gekennzeichnet**,
daß das Kraftfahrzeug ein Kurvenneigerfahrzeug ( 1 ) ist und der Schrägungswinkel der Abweisschrägen ( 9, 9 ) auf eine vorgesehene Kurvenneigung des Kurvenneigerfahrzeugs ( 1 ) abgestimmt ist.

10. Kraftfahrzeug nach Anspruch 1,
**dadurch gekennzeichnet**,
daß die Bodenanlage ( 8 ) des Kraftfahrzeugs ( Kurvenneigerfahrzeugs 1 ) zumindest teilweise aus Leichtmetall besteht.

11. Kraftfahrzeug nach Anspruch 10,
**dadurch gekennzeichnet**,
daß der Unterboden ( 10 ) teilweise aus Leichtmetallschaum (Aluminiumschaum) besteht.

12. Kraftfahrzeug nach Anspruch 10,
**dadurch gekennzeichnet**,
daß die Bodenanlage ( 8 ) seitlich von Strangpreßprofilen aus Leichtmetall ( Längsträgern 11 ) begrenzt wird.

13. Kraftfahrzeug nach Anspruch 11,
**dadurch gekennzeichnet**,
daß der Unterboden ( 10 ) als Sandwichkonstruktion ausgebildet ist, wobei zwischen zwei Deckbleche ein Kern aus Leichtmetallschaum (Aluminiumschaum) eingefügt ist.
